# EUROPEAN PATENT SPECIFICATION

(11) **EP 2 784 367 B1**
(45) Date of publication and mention of the grant of the patent: **19.04.2017**
(21) Application number: 12852326.3
(22) Date of filing: 19.11.2012
(51) Int. Cl.: B32B 5/18, B32B 5/24, B32B 15/08, E04B 1/80, F16L 59/02, F16L 59/065, F16L 59/08, E04B 1/76

(54) **Core member for vacuum insulation materials**
Kernelement für Vakuum-Isolationsmaterialien
Membre de base pour les matériaux d'isolation sous vide

(30) Priority: 24.11.2011 KR 20110123433
(43) Date of publication of application: 01.10.2014
(73) Proprietor: LG Hausys, Ltd., Seoul 150-721 (KR)
(72) Inventor: LEE, Myung, Hwaseong-si Gyeonggi-do 445-761 (KR); JUNG, Seong Moon, Daejeon 305-707 (KR); KIM, Eun Joo, Anyang-si Gyeonggi-do 431-080 (KR)
(74) Representative: Gill Jennings & Every LLP
(86) International application number: PCT/KR2012/009778
(87) International publication number: WO 2013/077602

(56) References cited:
- EP-A2- 0 862 032
- EP-B1- 1 640 148
- JP-B2- 4 353 185
- KR-A- 20090 031 601
- KR-A- 20110 072 794
- US-A- 3 007 596
- US-A- 3 990 202
- US-A- 5 091 233
- US-A- 5 316 835
- US-A1- 2009 286 022

## Description

### [Technical Field]

The present invention relates to a core member for vacuum insulation materials including a plurality of core layers and a radiant heat-blocking film disposed between the core layers, and a vacuum insulation material including the core member.

### [Background Art]

In a typical vacuum insulation material, an outer cover is formed of a multilayer film including a metal-deposited film or an aluminum foil, a core member provided as an inner material is formed of glass fibers, fumed silica or the like, and a getter is formed of calcium oxide (CaO).

Although Korean Patent Publication No. 2004-0047256 and Korean Patent No. 10-0823406 disclose a vacuum insulation material including a core member receiving an inorganic fiber polymer, a core member including fiber aggregates, and the like, these inventions are directed to improving thermal properties by blocking heat transfer due to convection. However, since heat is transferred by conduction, convection and radiation, and heat transfer due to radiation still cannot be blocked, these inventions have a limitation in application to a heat insulator.

United States patent number 5,091,233 describes a getter structure for vacuum insulation panels. Document US3007596 A discloses a core member for vacuum insulation materials having the features of the preamble of claim 1.

### [Disclosure]

### [Technical Problem]

It is an aspect of the present invention to provide a core member for vacuum insulation materials exhibiting excellent properties in terms of both initial heat insulation properties and long-term durability, and a vacuum insulation material which includes the core member and blocks heat transfer due to radiation.

### [Technical Solution]

Aspects of the invention are set out in the appended claims.

### [Advantageous Effects]

According to the invention, the core member for vacuum insulation materials can improve initial heat insulation properties, block heat transfer due to conduction and convection and heat transfer due to radiation as well, and exhibit excellent durability.

In addition, the vacuum insulation material according to the present invention has an excellent merit of maintaining heat insulation properties for at least 10 years or more due to properties of the core member and other materials.

### [Description of Drawings]

Figs. 1 and 2 are sectional views of core members for vacuum insulation materials according to embodiments of the present invention.
Fig. 3 is a sectional view of a vacuum insulation material according to one embodiment of the present invention.
Fig. 4 shows vacuum insulation materials of Comparative Examples 2 and 3.

### [Best Mode]

The above and other aspects, features, and advantages of the present invention will become apparent from the detailed description of the following embodiments in conjunction with the accompanying drawings. It should be understood that the present invention is not limited to the following embodiments
and may be embodied in different ways, and that the embodiments are provided for complete disclosure and thorough understanding of the invention by those skilled in the art. The scope of the invention is defined only by the appended claims. Like components will be denoted by like reference numerals throughout the specification.

Hereinafter, a core member for vacuum insulation materials according to embodiments of the present invention and a vacuum insulation material using the core member will be described in detail with reference to the accompanying drawings.

### Core member for vacuum insulation materials

First, a core member for vacuum insulation materials according to embodiments of the present invention will be described in detail.

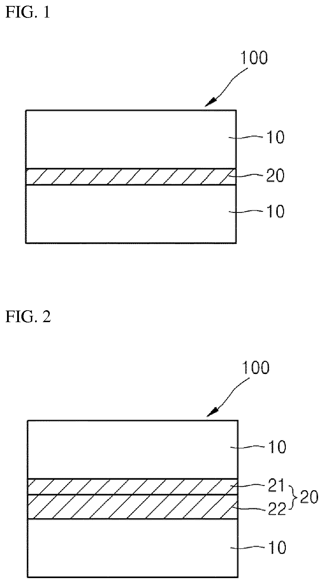

Fig. 1 is a sectional view of a core member 100 for vacuum insulation materials according to one embodiment of the invention. The core member 100 includes a plurality of core layers 10 and a radiant heat-blocking film 20 disposed between the core layers.

According to the invention, the core layers 10 included in the core member 100 include materials, such as glass wools, ceramic fibers, and the like, which are prepared by fiberizing inorganic materials, without being limited thereto. Here, the fibers have an average fiber diameter from 0.8 µm to 10 µm and have a length of 200 mm or less.

In addition, the core member 100 for vacuum insulation materials according to the invention includes a plurality of core layers 10. The core layers 10 may include the same or different components.

The core layers 10 include at least one radiant heat-blocking film 20 disposed between the core layers. The radiant heat-blocking film 20 may have an emissivity of 0.5 or less. If the radiant heat-blocking film 20 has an emissivity out of this range, the radiant heat-blocking film 20 can be significantly deteriorated in ability to block radiant heat.

Emissivity means a ratio of radiation emitted from a black body or a surface to theoretical radiation expected by Planck's law. The term "emissivity" refers to an emissivity value measured within an infrared range in accordance with the American Society of Testing and Materials (ASTM). The emissivity is measured by radiometric measurement, and recorded as hemispherical emissivity and normal emissivity.

The emissivity indicates a percentage of long-wavelength infrared radiation emitted by the coating, and low emissivity means that heat is less transferred through glass. More specifically, herein, the emissivity refers to a ratio of re-radiant energy when an object absorbs external light energy and then performs partial re-radiation or surface reflection of light. Emissivity is represented by a value between 0 and 1, and when an object has an emissivity closer to 0, the object has stronger blocking of radiant heat. Emissivity varies according to the kind of material and a surface state. Since the radiant heat-blocking film according to the invention has an emissivity of 0.5 or less, heat transfer through an inner supporter is reduced, whereby the core member for vacuum insulation materials can exhibit improved heat insulation properties.

The radiant heat-blocking aluminium film may have emissivity for radiant heat of 0.5 or less.

Although aluminum has high thermal conductivity and is not an effective heat insulator, an aluminum foil has an extremely thin thickness and thus provides a negligible level of conduction. In addition, since conducted radiant heat can be suppressed using a surface exhibiting low absorption and radiation of radiant heat, the aluminum foil having such a surface acts as a type of heat insulator reflecting radiant heat of an electromagnetic wave behaving like light while glittering.

In addition, the aluminum foil is a blocking layer formed to reduce thermal conductivity of the vacuum insulation material by blocking heat transfer due to radiation, and includes 1.3% by weight (wt%) to 7 wt% of iron (Fe). Since the aluminum foil including iron within this content range includes fine grains and thus has less slippage between the grains, the aluminum foil exhibits large allowable stress which the aluminum foil itself can accept, and thus can endure processes using pressure and the like, and exhibit high ductility.

Fig. 2 is a sectional view of a core member 100 for vacuum insulation materials according to another embodiment of the present invention. According to this embodiment, the radiant heat-blocking film may include a resin substrate 21 and a metal foil 22 mounted on the resin substrate 21.

According to the present invention, the resin substrate 21 may include polypropylene, biaxially oriented polypropylene (OPP), low-density polyethylene, high-density polyethylene, polystyrene, polymethyl methacrylate, polyamide-6 (nylon), polyethylene terephthalate (PET), poly-4-methyl-1-pentene, polybutylene, polypentadiene, polyvinyl chloride, polycarbonate, polybutylene terephthalate, ethylene-propylene copolymers, and ethylene-butene-propylene terpolymers, without being limited thereto.

In addition, the metal foil 22 mounted on the resin substrate 21 may be formed of metal, which includes aluminum and iron. According to the present invention, metal deposition may be performed by any method known in the art, such as thermal deposition and ion sputtering, and a metal deposition layer may have a thickness from about 20 Å (0.002 µm) to 1,000 Å (0.1 µm) in terms of economy and retention of thermal insulation.

In formation of the radiant heat-blocking film 20, a metal free from foam caused by moisture, plasticizers, degradation gases and the like in a vacuum may be deposited on the resin substrate having good affinity in terms of improvement of gas barrier properties and prevention of moisture permeation.

In particular, using the resin substrate including polyethylene terephthalate and the metal foil including aluminum, an aluminum-deposited film may be prepared. The aluminum-deposited film has an emissivity for radiant heat of 0.5 or less, and aluminum may be deposited using sputtering.

In more detail, when aluminum is heated to 1,500°C or higher under a vacuum of about 10⁻⁴ torr to about 10⁻⁸ torr, the aluminum is evaporated and deposited onto a substrate such as plastic films, paper sheets, and the like. The deposition layer has a thickness from 400 Å to 800 Å, and the deposition surface shows the same external appearance as that of a metallic aluminum foil. In addition, the polyethylene terephthalate substrate included in the aluminum-deposited film serves as a moisture-proof layer, and suppresses dew condensation. Since the resin substrate exhibits deteriorated adhesion when including polyethylene and polypropylene, the resin substrate requires corona treatment and the like.

The radiant heat-blocking film 20 has a thickness from 5 µm to 15 µm. Preferably, the radiant heat-blocking film 20 has a thickness from 10 µm to 15 µm. If the thickness of the radiant heat-blocking film 20 is less than 5 µm, it is difficult to fabricate the radiant heat-blocking film 20 in film form, and the radiant heat-blocking film 20 cannot have an emissivity of 0.5 or less due to low density and numerous pin holes even when prepared in film form. If the thickness of the radiant heat-blocking film 20 exceeds 15 µm, the radiant heat-blocking film 20 has an adverse effect on high thermal conductivity of the vacuum insulation material due to high thermal conductivity thereof despite satisfactory emissivity.

### Vacuum insulation material

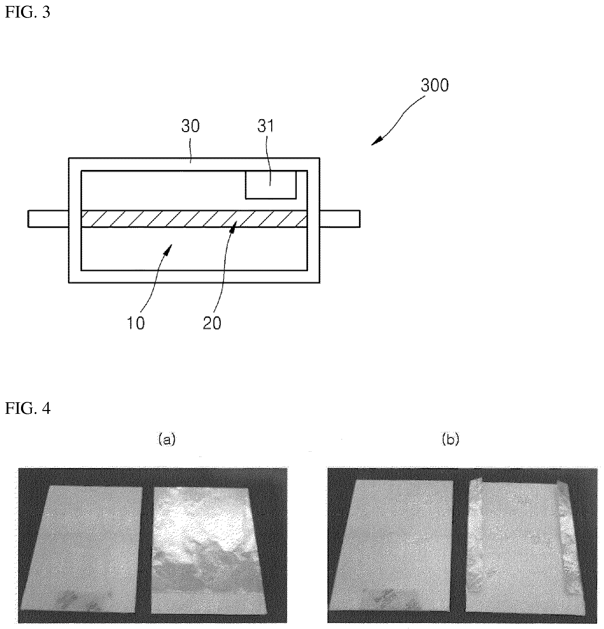

Fig. 3 is a sectional view of a vacuum insulation material 300 according to one embodiment of the present invention. According to this embodiment, a vacuum insulation material 300 includes a plurality of core layers 10, a radiant heat- blocking film 20 disposed between the core layers, and an outer cover 30 packing the core layers and the radiant heat-blocking film in a vacuum. The vacuum insulation material 300 may further include a getter 31 attached to or inserted into the core member.

With the outer cover 30, the vacuum insulation material 300 according to this embodiment can exhibit optimal air-tightness and long-term durability. In addition, although gas and moisture can be generated inside the outer cover 30 due to external temperature change, the getter 31 is used to prevent such a problem.

The vacuum insulation material includes the core member and the radiant heat-blocking film, which are the same as those described above. In addition, the vacuum insulation material exhibits excellent heat insulation properties and long-term durability for radiant heat, and specific examples and comparative examples thereof will be described hereinafter.

Hereinafter, the present invention will be described in more detail with reference to some examples and comparative examples. It should be understood that these examples are not to be in any way construed as limiting the present invention.

### [Preparation of vacuum insulation material]

A core layer including glass wools was prepared to a size of 8 mm×190 mm× 250 mm (thickness × width × length), and used as a core member for vacuum insulation materials. Next, an outer cover was formed in a structure of a 12 µm thick polyvinylidene chloride (PVCD) and polyethylene terephthalate (PET) film, a 25 µm thick nylon film, a 7 µm thick aluminum foil, and a 50 µm thick linear low-density polyethylene (LLDPE) film.

Next, two getters prepared by placing 25 g of calcium oxide (CaO) having a purity of 95% in a pouch were placed inside the core member for vacuum insulation materials, as shown in Fig. 3.

Next, the core member for vacuum insulation materials was inserted into a bag, followed by sealing the bag in a vacuum of 10 Pa, thereby preparing a vacuum insulation material according to the invention.

### <Examples 1 to 8>

Each of the films of Examples 1 to 8 as shown in Table 1 was inserted between the core layers in the vacuum insulation material, thereby preparing a vacuum insulation material. The examples do not fall within the scope of claim 1. Then, thermal conductivity of the vacuum insulation material was measured. Emissivity of a metal included in the radiant heat-blocking film was measured using an emissivity tester (INGLAS TIR 100-2). Emissivity of the metal may vary depending upon the kind of metal and a surface state thereof.

**[Table 1]**

| | Radiant heat-blocking film | | | | | Core layer | Thermal conductivity (mW/mK) |
|---|---|---|---|---|---|---|---|
| | Metal foil | Resin substrate | Film thickness | Emissivity | Location | Number of core layers | |
| Example 1 | Al | - | 15 µm | 0.2 | Between core layers | 2 | 3.876 |
| Example 2 | Cu | - | 15 µm | 0.3 | Between core layers | 2 | 3.89 |
| Example 3 | Ni | - | 15 µm | 0.41 | Between core layers | 2 | 3.92 |
| Example 4 | Al | PET | 12 µm | 0.38 | Between core layers | 2 | 3.847 |
| Example 5 | Ni | PP | 12 µm | 0.47 | Between core layers | 2 | 3.912 |
| Example 6 | Cu | PE | 12 µm | 0.5 | Between core layers | 2 | 3.931 |
| Example 7 | Al | - | 45 µm | 0.23 | Between core layers | 4 | 3.871 |
| Example 8 | Al | PET | 45 µm | 0.4 | Between core layers | 4 | 3.91 |

### <Comparative Examples 1 to 6>

Each of the films of Comparative Examples 1 to 6 was inserted between the core layers, thereby preparing a vacuum insulation material. Then, thermal conductivity of the vacuum insulation material was measured. Emissivity of a metal included in the radiant heat-blocking film was measured using an emissivity measurement apparatus (INGLAS TIR 100-2). Emissivity of the metal may vary depending upon the kind of metal and a surface state thereof. In particular, the vacuum insulation material of Comparative Example 1 did not include any films inserted therein. The examples do not fall within the scope of claim 1.

**[Table 2]**

| | Radiant heat-blocking film | | | | | Core layer | Thermal conductivity (mW/mK) |
|---|---|---|---|---|---|---|---|
| | Metal foil | Resin substrate | Thickness | Emissivity | Location | Number of core layers | |
| Comparative Example 1 | ~ | - | - | - | - | 1 | 4.384 |
| Comparative Example 2 | Al | - | 15 µm | 0.2 | Partially covered | 2 | 4.000 |
| Comparative Example 3 | Al | - | 15 µm | 0.2 | Fully covered | 2 | 4.060 |
| Comparative Example 4 | Al | PET | 12 µm | 0.72 | Between core layers | 2 | 4.178 |
| Comparative Example 5 | Al | - | 54 µm | 0.2 | Between core layers | 4 | 4.251 |
| Comparative Example 6 | Al | PET | 48 µm | 0.5 | Between core layers | 4 | 4.198 |

### (1) Thermal conductivity depending on location of radiant heat-blocking film

As shown in Figs. 4(a) and 4(b), the term "partially covered" in Comparative Example 2 means that the core member including two layers was partially covered with the aluminum foil, and the term "fully covered" in Comparative Example 3 means that the core member was fully covered with the aluminum foil. The aluminum foil was disposed as above, followed by measuring thermal conductivity. The resulting thermal conductivities were measured to be 4 mW/mK or more. The reason is that, when the core member of the radiant heat-blocking film was "partially covered" or "fully covered", there was an adverse effect in that heat transfer occurred well since heat was transferred to an opposite side along the aluminum foil.

Conversely, thermal conductivities of the vacuum insulation materials of Examples 1 to 7 were measured to be 4 mW/mK or less, and the reason is that the film disposed between the core layers blocked radiant heat. In addition, it could be seen that an effect of suppressing conduction of radiant heat was obtained when the radiant heat-blocking film had an emissivity of 0.5 or less.

As a result, it was confirmed that, when the core member including at least one film of an emissivity of 0.5 or less between the core layers was applied to the vacuum insulation material, the vacuum insulation material exhibited lower thermal conductivity than existing vacuum insulation materials due to blocking of radiant heat.

### (2) Thermal conductivity depending on emissivity of radiant heat-blocking film

In the vacuum insulation material of Comparative Example 4, an aluminum-deposited PET film was placed between the core layers, and a PET film surface instead of a deposition surface was placed in a direction of receiving heat. The PET film surface had an emissivity of 0.5 or more as determined by measurement, and the reason of high thermal conductivity is that there was no effect of blocking radiant heat.

Conversely, it could be seen that the aluminum-deposited films, in which PET was used as the resin substrate of the radiant heat-blocking film and aluminum was used as the metal foil, were most effective in reduction of thermal conductivity, among the vacuum insulation materials of Examples.

### (3) Thermal conductivity depending on thickness of radiant heat-blocking film

In Comparative Examples 5 and 6, thermal conductivities of the vacuum insulation materials including the aluminum foils having a thickness not within the range of 5 µm to 15 µm was measured. As a result, there was an adverse effect of increasing thermal conductivity of the vacuum insulation material.

In addition, from the measurement results of the thermal conductivities of the vacuum insulation materials of Examples 7 and 8, it was confirmed that the vacuum insulation material had a thermal conductivity of 4 mW/mK or less when the radiant heat-blocking film had a thickness satisfying the thickness range of the present invention even when the vacuum insulation material included the plural core layers. From these results, change in properties of the vacuum insulation material depending on thickness of the radiant heat-blocking film could be confirmed.

Although the present invention has been described with reference to some embodiments in conjunction with the accompanying drawings, it should be understood that the foregoing embodiments are provided for illustrative purposes only and are not to be in any way construed as limiting the present invention, and that various modifications, changes, alterations, and equivalent embodiments can be made by those skilled in the art without departing from the scope of the accompanying claims.

## Claims

1. A core member (100) for vacuum insulation materials comprising:
a plurality of core layers (10) comprising inorganic fibers having an average diameter from 0.8 µm to 10 µm and
a radiant heat-blocking aluminium film (20), disposed between the core layers, **characterised in that**
- the inorganic fibers have a length of 200 mm or less; and
- the radiant heat-blocking aluminium film (20) comprises from 1.3 to 7 wt% iron and has a thickness of 5 µm to 15 µm.

2. The core member for vacuum insulation materials according to claim 1 wherein the radiant heat-blocking film has an emissivity of 0.5 or less.

3. The core member for vacuum insulation materials according to claim 1 wherein the radiant heat-blocking film comprises a metal foil (22).

4. The core member for vacuum insulation materials according to claim 1 wherein the radiant heat-blocking film comprises a resin substrate (21), and a metal foil (22) formed on the resin substrate.

5. The core member for vacuum insulation materials according to claim 1 wherein the core layers comprise at least one selected from among polyurethane foam, glass wools, and ceramic fibers.

6. A vacuum insulation material comprising:
the core member of any preceding claim; and
an outer cover (30) packing the core layers and the radiant heat-blocking film in a vacuum.

## Patentansprüche

1. Kernelement (100) für Vakuumisolationsmaterialien, Folgendes umfassend:
mehrere Kernschichten (10), die anorganische Fasern mit einem durchschnittlichen Durchmesser von 0,8 µm bis 10 µm umfassen, und
eine zwischen den Kernschichten angeordnete strahlungswärmedämmende Aluminiumfolie (20),
**dadurch gekennzeichnet, dass**
- die anorganischen Fasern eine Länge von höchstens 200 mm aufweisen; und
- die strahlungswärmedämmende Aluminiumfolie (20) von 1,3 bis 7 Gew.-% Eisen umfasst und eine Dicke von 5 µm bis 15 µm aufweist.

2. Kernelement für Vakuumisolationsmaterialien nach Anspruch 1, wobei die strahlungswärmedämmende Folie einen Emissionsgrad von höchstens 0,5 aufweist.

3. Kernelement für Vakuumisolationsmaterialien nach Anspruch 1, wobei die strahlungswärmedämmende Folie eine Metallfolie (22) umfasst.

4. Kernelement für Vakuumisolationsmaterialien nach Anspruch 1, wobei die strahlungswärmedämmende Folie ein Harzsubstrat (21) umfasst und eine Metallfolie (22) auf dem Harzsubstrat ausgebildet ist.

5. Kernelement für Vakuumisolationsmaterialien nach Anspruch 1, wobei die Kernschichten wenigstens eines, ausgewählt aus Polyurethanschaum, Glaswollen und Keramikfasern, umfasst.

6. Vakuumisolationsmaterial, Folgendes umfassend:
das Kernelement nach einem der vorhergehenden Ansprüche; und
eine Außenabdeckung (30), die die Kernschichten und die strahlungswärmedämmende Folie in einem Unterdruck verpackt.

## Revendications

1. Élément noyau (100) pour des matériaux d'isolation sous vide comprenant :
une pluralité de couches noyau (10) comprenant des fibres inorganiques ayant un diamètre moyen de 0,8 µm à 10 µm, et
un film d'aluminium bloquant la chaleur rayonnante (20), disposé entre les couches noyau,
**caractérisé en ce que**
- les fibres inorganiques ont une longueur de 200 mm ou moins ; et
- le film d'aluminium bloquant la chaleur rayonnante (20) comprend de 1,3 à 7 % en poids de fer et a une épaisseur de 5 µm à 15 µm.

2. Élément noyau pour des matériaux d'isolation sous vide selon la revendication 1, dans lequel le film bloquant la chaleur rayonnante a une émissivité de 0,5 ou moins.

3. Élément noyau pour des matériaux d'isolation sous vide selon la revendication 1, dans lequel le film bloquant la chaleur rayonnante comprend une feuille de métal (22).

4. Élément noyau pour des matériaux d'isolation sous vide selon la revendication 1, dans lequel le film bloquant la chaleur rayonnante comprend un substrat de résine (21) et une feuille de métal (22) formée sur le substrat de résine.

5. Élément noyau pour des matériaux d'isolation sous vide selon la revendication 1, dans lequel les couches noyau comprennent au moins l'un parmi une mousse de polyuréthane, des laines de verre et des fibres de céramique.

6. Matériau d'isolation sous vide comprenant :
l'élément noyau de l'une quelconque des revendications précédentes ; et
une enveloppe externe (30) emballant sous vide les couches noyau et le film bloquant la chaleur rayonnante.
